# EUROPÄISCHE PATENTSCHRIFT

(11) **EP 3 746 758 B1**
(45) Veröffentlichungstag und Bekanntmachung des Hinweises auf die Patenterteilung: **11.05.2022**
(21) Anmeldenummer: 19702249.4
(22) Anmeldetag: 28.01.2019
(51) Int. Cl.: G01M 3/32

(54) **VERFAHREN ZUR LECKPRÜFUNG MIT EINER FOLIENKAMMER MIT BELÜFTETEM MESSVOLUMEN**
METHOD FOR LEAK TESTING BY MEANS OF A FILM CHAMBER HAVING A VENTED MEASUREMENT VOLUME
PROCÉDÉ DE TEST DE FUITE À L'AIDE D'UNE CHAMBRE À FILM AYANT UN VOLUME DE MESURE VENTILÉ

(30) Priorität: 29.01.2018 DE 102018201313
(43) Veröffentlichungstag der Anmeldung: 09.12.2020
(73) Patentinhaber: Inficon GmbH, 50968 Köln (DE)
(72) Erfinder: ROLFF, Norbert, 50169 Horrem (DE)
(74) Vertreter: dompatent von Kreisler Selting Werner - Partnerschaft von Patent- und Rechtsanwälten mbB
(86) Internationale Anmeldenummer: PCT/EP2019/052001
(87) Internationale Veröffentlichungsnummer: WO 2019/145535

(56) Entgegenhaltungen:
- WO-A1-2015/140042
- DE-A1- 19 846 800
- US-A- 3 027 753

## Beschreibung

Die Erfindung betrifft ein Verfahren zum Prüfen eines Prüflings auf das Vorhandensein eines Lecks unter Verwendung einer Folienkammer.

Die Folienkammer ist eine Prüfkammer mit mindestens einem flexiblen Wandbereich, der zum Beispiel aus einer Folie besteht. Eine typische Folienkammer weist zwei Folienlagen auf, die um den Prüfling herum gegeneinander gelegt werden, um den Prüfling vollständig zu umschließen. Die Folienkammer wird nach Aufnahme des Prüflings hermetisch verschlossen und evakuiert. Anschließend wird die Druckänderung in dem Folienkammervolumenbereich außerhalb des Prüflings überwacht, wobei ein Druckanstieg als Hinweis auf ein Leck in dem Prüfling angesehen wird. Alternativ zur Überwachung des Drucks im Folienkammervolumen kann auch der flexible Wandbereich überwacht werden, wobei eine Veränderung des flexiblen Wandbereichs oder der Folie auf ein Leck hindeuten kann. Ein derartiges Verfahren ist bekannt aus DE 10 2012 200 063 A1.

In DE 10 2014 218 399 A1 wird zur Grobleckprüfung an einem Prüfling eine Folienkammer beschrieben, die ein an den flexiblen Wandbereich angrenzendes Messvolumen auf der im Folienkammervolumen gegenüberliegenden Seite des flexiblen Wandbereichs aufweist. Das Messvolumen ist hermetisch von dem Folienkammervolumen getrennt ausgebildet. In einem Ausführungsbeispiel, bei dem die Folienkammer zwei flexible Wandbereiche in Form jeweils einer Folie aufweist, grenzt an jede der beiden Folien ein Messvolumen an. Bei dem beschriebenen Verfahren wird die den Prüfling enthaltende und geschlossene Folienkammer evakuiert, wobei bereits während des Evakuierens der Folienkammer das Messvolumen überwacht wird, um anhand des Ergebnisses der Überwachung eine Aussage über die Größe eines möglichen Lecks in dem Prüfling zu treffen. Das Überwachen des Messvolumens kann durch das Messen des Drucks in dem Messvolumen oder durch Messen des Gasflusses in der Folienkammer oder aus der Folienkammer heraus erfolgen.

Wenn ein Prüfling, der ein Grobleck aufweist, auf diese Weise untersucht wird, wird beim Evakuieren der Folienkammer auch der Prüfling zumindest zu einem Teil mit evakuiert. Aufgrund des flexiblen Wandbereichs zwischen dem Folienkammervolumen und dem Messvolumen vergrößert sich dann das Messvolumen. Die Vergrößerung des Messvolumens ist dabei größer als im Falle eines dichten Prüflings oder im Falle eines Prüflings, der ein kleineres Leck aufweist. Im Falle eines dichten Prüflings wird lediglich das Folienkammervolumen im Bereich außerhalb des Prüflings evakuiert. Im Falle eines Prüflings mit einem Grobleck wird zudem auch der Prüfling oder zumindest ein Teil des Prüflingsvolumens evakuiert, sodass ein größeres Volumen evakuiert wird als im Falle eines dichten Prüflings. Dadurch ist die Volumenausdehnung des Messvolumens umso größer, je größer das Leck in einem Prüfling ist. Anhand der Ausdehnung des Messvolumens und/oder des flexiblen Wandbereichs kann dann eine Aussage über die Größe eines möglichen Lecks in dem Prüfling getroffen werden.

Weitere Folienkammern sind im Stand der Technik aus DE 198 46 800 A1, US 3 027 753 A und WO 2015/140042 A1 bekannt.

Der Erfindung liegt die Aufgabe zugrunde, das vollständige Schließen der Prüfkammer zu erfassen.

Das erfindungsgemäße Verfahren ist definiert durch die Merkmale von Patentanspruch 1.

Demnach wird das vollständige Schließen der Folienkammer anhand des Signals einer Positionsmessvorrichtung ermittelt, die die Relativposition der Folienkammerwände zueinander erfasst. Damit kann das vollständige Schließen ermittelt werden und der Startpunkt für den Beginn des Evakuierens festgelegt werden. Zudem wird ermöglicht, zu erkennen, ob ein auf ein Leck hindeutendes Messsignal tatsächlich aus einem Leck im Prüfling oder aus einer nicht geschlossenen Folienkammer resultiert. Im Falle einer noch geöffneten Folienkammer wird beim Evakuieren der Folienkammer ein Gasstrom aus der die Folienkammer umgebenden Atmosphäre angesaugt. Um zu verhindern, dass das Ansaugen von Gas aus der Folienkammerumgebung versehentlich als Leck im Prüfling bewertet wird, wird das Signal der Positionsmessvorrichtung herangezogen. Nur wenn das Signal der Positionsmessvorrichtung darauf hindeutet, dass die Folienkammer vollständig geschlossen ist, wird bei Vorliegen eines auf ein Leck im Prüfling hindeutendes Messsignal auf ein Leck im Prüfling geschlossen.

Erfindungsgemäß wird das vollständige Schließen der Folienkammer ermittelt, in dem
a) der Druck in den Messvolumina gemessen wird und in dem überwacht wird, ob der gemessene Druck einen vorgegebenen Schwellenwert übersteigt, und
b) anhand des Messsignals einer Positionsmessvorrichtung die Relativposition der Folienkammerwände zueinander erfasst wird.

Der geschlossene Zustand der Folienkammer wird detektiert, wenn das Druckmesssignal gemäß a) und das Positionsmesssignal gemäß b) in Kombination vorliegen. Die Erfindung basiert somit auf der Idee, dass der geschlossene Zustand der Folienkammer detektiert wird, wenn zwei unabhängige, den geschlossenen Zustand angebende Signale in Kombination vorliegen, nämlich das entsprechende Messsignal der Druckmessvorrichtung und das Signal der Positionsmessvorrichtung. Die Gefahr eines falschen Detektierens des geschlossenen Zustands anhand des Druckmesssignal bei versehentlichem Berühren der Folie, ohne dass die Folienkammer geschlossen ist, ist dadurch vermieden. Zudem ist die Genauigkeit des Detektierens des geschlossenen Zustands gegenüber einer reinen Messung mit nur einer Positionsmessvorrichtung gemäß b) erhöht, indem zusätzlich noch der Druckstoß beim Schließen der Folienkammerwände, das heißt wenn die Dichtungen der Folienkammer aufeinander treffen, berücksichtigt wird. Wenn noch ein geringer Restspalt zwischen den Folienkammerdichtungen verbleibt, obwohl die Positionsmessvorrichtung bereits einen Kontakt generiert, bleibt der Druckstoß aus.

Im Folgenden wird anhand der Figuren ein Ausführungsbeispiel der Erfindung näher erläutert. Es zeigen:
- Fig. 1: die Folienkammer im geöffneten Zustand und
- Fig. 2: die Folienkammer im geschlossenen Zustand mit eingelegtem Prüfling.

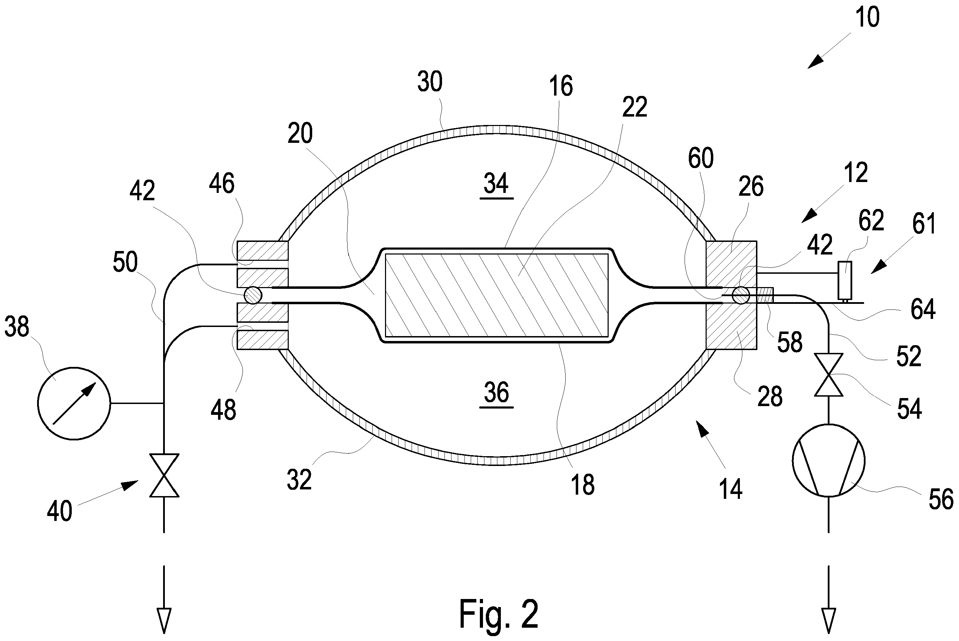

Die in den Figuren dargestellte Folienkammer 10 hat einen oberen Deckel 12 und einen unteren Deckel 14. Ein wesentliches Element des oberen Deckels 12 ist die obere Folienlage 16 und ein wesentliches Element des unteren Deckels 14 ist die untere Folienlage 18. Die beiden Folienlagen 16, 18 umschließen im geschlossenen Zustand der Folienkammer (siehe Fig. 2) den in dem Folienkammervolumen 20 enthaltenen Prüfling 22.

Jede der beiden Folienlagen 16, 18 weist an ihrer dem Folienkammervolumen 20 zugewandten Seite ein in den Figuren nicht dargestelltes Vlies als gasleitende Schicht auf. Jede Folienlage 16, 18 bildet zusammen mit dem nicht dargestellten Vlies den jeweiligen flexiblen Wandbereich der Folienkammer 10.

Die Folien 16, 18 sind im Bereich ihres äußeren Randes jeweils mit einem Messkammerring 26, 28 gasdicht verbunden. Die Folienlage 16 verschließt somit hermetisch das untere, der Folienkammer zugewandte Ende des oberen Messkammerrings 26. Die untere Folienlage 18 verschließt in entsprechender Weise das obere, dem Folienkammervolumen 20 zugewandte Ende des unteren Messkammerrings 28. Das jeweils der entsprechenden Folienlage 16, 18 gegenüberliegende Ende jedes Messkammerrings 26, 28 ist mit einem Messkammerdeckel 30, 32 hermetisch verschlossen.

Der Messkammerdeckel 30, der Messkammerring 26 und die Folienlage 16 umschließen somit ein oberes Messvolumen 34 und die Folienlage 18, der Messkammerring 28 und der Messkammerdeckel 32 umschließen ein unteres Messvolumen 36. Die Messvolumina 34, 36 sind hermetisch von dem Folienkammervolumen 20 und der die Folienkammer 10 umgebenden äußeren Atmosphäre getrennt. Durch eine in den Figuren nicht dargestellte gasleitende Verbindung, zum Beispiel einen Schlauch, sind die Messvolumina 34, 36 gasleitend miteinander verbunden, um einen steten Druckausgleich zwischen den Messvolumina 34, 36 zu bewirken.

Jedes Messvolumen 34, 36 ist über einen gasleitenden Kanal 46, 48 in dem betreffenden Messkammerring 26, 28 an einen Gasleitungsweg 50 angeschlossen. Der Gasleitungsweg 50 weist eine Druckmessvorrichtung 38 auf, mit der der Druck in den beiden Messvolumina 34, 36 der Messkammern gemessen werden kann. Zudem weist der Gasleitungsweg 50 ein steuerbares Belüftungsventil 40 auf, das den Gasleitungsweg 50 und die Messvolumina 34, 36 mit der die Folienkammer 10 außen umgebenden Atmosphäre verbindet. Im geschlossenen Zustand des Belüftungsventils 40 sind die Messvolumina 34, 36 von der Atmosphäre hermetisch getrennt und im geöffneten Zustand des Belüftungsventils 40 gasleitend mit der Atmosphäre verbunden.

Zwischen den beiden Folienlagen 16, 18 ist im Bereich des äußeren Randes ein Dichtungsring 42 vorgesehen, der eine gasdichte Verbindung zwischen den Folienlagen 16, 18 in geschlossenem Zustand der Folienkammer 10 schafft.

Die Folienkammer 10 ist über eine Evakuierungsleitung 52, die ein Ventil 54 aufweist, mit einer Vakuumpumpe 56 verbunden, die das Folienkammervolumen 20 zur äußeren Atmosphäre hin evakuiert. Die Vakuumleitung 52 ist über einen Vakuumanschluss 58 an einen zwischen den beiden Messkammerringen 26, 28 gebildeten Vakuumkanal 60 angeschlossen.

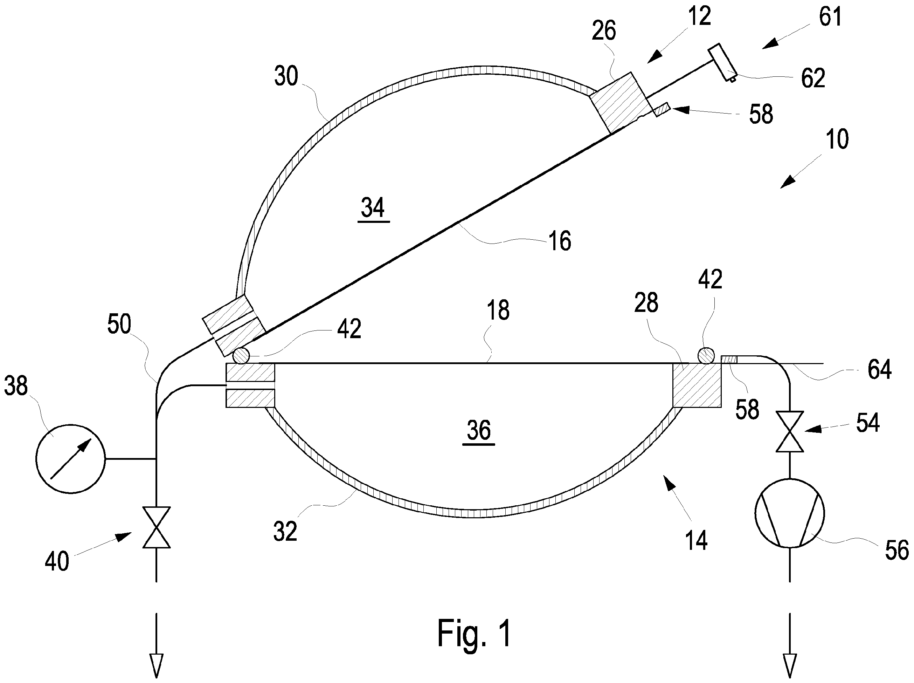

Figur 1 zeigt die Folienkammer 10 im geöffneten Zustand. Der Zugriff auf das Folienkammervolumen 25 ist frei, um den Prüfling 22 in das Folienkammervolumen 20 zu legen. Anschließend wird die Folienkammer 10 verschlossen und das Folienkammervolumen 20 mit der Vakuumpumpe 56 evakuiert, so dass sich die Folien 16, 18 eng an den Prüfling 22 anlegen.

Spätestens nach Einlegen des Prüflings 22 in die Folienkammer 10 und vor dem Verschließen der Folienkammer 10 wird das Belüftungsventil 40 geschlossen, so dass die Messkammervolumina 34, 36 hermetisch von der Atmosphäre getrennt sind, wenn der mit der Messvorrichtung 38 gemessene Druck innerhalb der Messkammervolumina 34, 36 einen vorgegebenen Schwellenwert nicht überschreitet. Dieser Schwellenwert ist so gewählt, dass bei einem vergleichsweise kleinen Prüfling die Folien 16, 18 an den Prüfling gepresst werden und sich an die äußere Kontur des Prüflings anschmiegen. Bei einem vergleichsweise großen Prüfling wird der mit der Messvorrichtung 38 gemessene Druck in den Messvolumina 34, 36 größer und übersteigt den Schwellenwert, wodurch das Belüftungsventil 40 automatisch öffnet. Hierzu sind die Druckmessvorrichtung 38 und das Belüftungsventil 40 mit einer elektronischen, in den Figuren der Einfachheit halber nicht dargestellten Steuervorrichtung verbunden, die den mit der Messvorrichtung 38 gemessenen Druck erfasst und mit dem Schwellenwert vergleicht und bei Überschreiten des Schwellenwerts automatisch das Belüftungsventil 40 öffnet und bei Unterschreiten des Schwellenwerts das Belüftungsventil 40 wieder schließt.

Mit Hilfe des Drucksensors der Messvorrichtung 38 kann der Druck in den Messvolumina 34, 36 beim Evakuieren der Folienkammer 10 überwacht werden, um anhand des Druckverlaufs zu ermitteln, ob der Prüfling ein Grobleck aufweist. Alternativ kann die Grobleckerkennung durch Messen des Gasflusses in dem Folienkammervolumen 20 oder des aus dem Folienkammervolumen 20 über die Vakuumleitung 52 ausströmenden Gases ermittelt werden.

Herkömmlicherweise wurde das Belüftungsventil 40 zur Druckmessung in den Messkammern geschlossen und bei großen Prüflingen geöffnet. In den Pausen zwischen den Messungen gleicht sich dabei die Folie 16, 18 in den drucklosen Zustand aus, wobei die Luft in die Messkammervolumina 34, 36 strömt. Wenn nun ein großer Prüfling eingelegt wird, war die Luft herkömmlicherweise durch die Schläuche des Gasleitungswegs 50 und das Belüftungsventil 40 herauszudrücken, was zu einer Zeitverzögerung führt und für den Anwender mit Aufwand verbunden ist.

Erfindungsgemäß wird das Belüftungsventil 40 geschlossen und nur dann geöffnet, wenn der Druck in den Messvolumina 34, 36 zu groß wird, das heißt einen vorgegebenen Schwellenwert übersteigt. Wird ein großer Prüfling 22 in die Folienkammer 10 eingelegt, steigt der Druck beim Schließen der Folienkammer 10 an, bis der Schwellenwert überschritten und das Belüftungsventil 40 automatisch geöffnet wird. Daraufhin kann überschüssige Luft wie bisher auch aus den Messkammern beziehungsweise den Messkammervolumina 34, 36 herausströmen bis die Folienkammer 10 vollständig geschlossen werden kann. Das Belüftungsventil 40 bleibt dann während der Messung und beim anschließenden Entnehmen des Prüflings 22 geschlossen. Beim Einlegen eines nachfolgenden Prüflings muss nun die Luft nicht wieder aus den Messkammervolumina 34, 36 gedrückt werden, da die Luft bereits herausgepresst wurde und aufgrund des verschlossenen Belüftungsventils 40 keine neue Luft in die Messkammervolumina 34, 36 eingeströmt ist. Nur beim Einlegen des ersten Prüflings mehrerer nachfolgender Messungen an verschiedenen Prüflingen muss also die Gasmenge in den Messkammervolumina 34, 36 auf herkömmliche Weise eingestellt werden.

Dabei besteht der Vorteil, dass bei nachfolgenden Messungen an verschiedenen Prüflingen nicht jedes Mal beim Einlegen eines neuen, nachfolgenden Prüflings überschüssige Luft aktiv aus den Messkammervolumina herauszupressen ist. Da sich die Folien 16, 18 beim Schließen der Folienkammer 10 um den Prüfling 22 legen, erfolgt das Abpumpen des Folienkammervolumens 20 ebenfalls schneller als bei dem herkömmlichen Verfahren. Die Erfindung bietet somit den entscheidenden Vorteil, dass nachfolgende Messungen an verschiedenen Prüflingen schneller als bisher erfolgen.

Die Folienkammer 10 ist mit einer Positionsmessvorrichtung 61 versehen, die dazu ausgebildet ist, den Öffnungs- beziehungsweise Schließzustand der Folienkammer 10 zu ermitteln. Hierzu ist ein Kontaktschalter 62 über den oberen Messkammerring 26 an dem oberen Deckel 12 befestigt. Entsprechend ist an dem unteren Messkammerring 28 und dadurch an dem unteren Deckel 14 ein Kontaktelement 64 derart angeordnet, dass der Kontaktschalter 62 in dem in Fig. 2 geschlossenen Zustand der Folienkammer 10 gegen das Kontaktelement 64 gepresst und dadurch betätigt wird. Durch Betätigung des Kontaktschalters 62 wird der geschlossene Zustand der Folienkammer 10 signalisiert. In dem in Fig. 1 dargestellten geöffneten Zustand wird der Kontaktschalter 62 nicht betätigt, wodurch der geöffnete beziehungsweise nicht vollständig geschlossene Zustand der Folienkammer 10 signalisiert wird.

Die Erfindung basiert auf der Idee, dass der geschlossene Zustand der Folienkammer 10 erst dann detektiert wird, wenn zwei unabhängige, den geschlossenen Zustand angebende Signale in Kombination vorliegen, nämlich das entsprechende Messsignal der Druckmessvorrichtung 38 und das Signal der Positionsmessvorrichtung 61.

Die Druckmessvorrichtung 38 misst während des Schließens der Folienkammer 10 den Druck in den Messvolumina 34, 36 und vergleicht den gemessenen Druck mit einem vorgegebenen Schwellenwert. Der Schwellenwert ist so gewählt, dass der beim vollständigen Schließen der Folienkammer entstehende Druckstoß in den Messvolumina 34, 36 erkannt wird. Das bedeutet, dass der beim Schließen der Folienkammer 10, wenn die Messkammerringe 26, 28 die Dichtung 42 berühren, resultierende kurzzeitige Überdruck in den Messvolumina 34, 36 oberhalb des Schwellenwertes liegt.

Da bei einem plötzlichen Druck auf die Folien 16, 18 jedoch ebenfalls ein Druckstoß innerhalb der Messvolumina 34, 36 resultiert, kann das Signal der Druckmessvorrichtung 38 auch dann auf den geschlossenen Zustand der Folienkammer 10 hindeuten, wenn die Folienkammer 10 nicht geschlossen ist.

Um dies zu vermeiden, wird zusätzlich auch noch das Signal der Positionsmessvorrichtung 61 ausgewertet. Wenn der Kontakt des Schalters 62 schließt, wenn zugleich der von der Druckmessvorrichtung 38 gemessene Druck den genannten Schwellenwert übersteigt, wird davon ausgegangen, dass der gemessene Druckstoß vom Schließen der Folienkammer 10 ausgelöst wurde und nicht beispielsweise durch eine Berührung der Folien 16, 18.

Wenn nur das Signal der Positionsmessvorrichtung 60 als Hinweis auf den Schließzustand der Folienkammer 10 ausgewertet würde, könnte fälschlicherweise der Schließzustand erkannt werden, obwohl noch ein geringer Spalt zwischen einem Messkammerring 26, 28 und der Dichtung 42 verbleibt. Erst der beim Kontaktieren der Dichtung 42, wenn die Folienkammer 10 also vollständig geschlossen ist, resultierende Druckstoß und das damit verbundene Überschreiten des Schwellenwerts des Druckmesssignals dient bei betätigtem Schalter 62 als ausreichender Hinweis, dass die Folienkammer 10 vollständig geschlossen wurde.

Bei manchen Betriebsarten wird das Belüftungsventil 40 während der Volumenmessung geschlossen. Hierbei ergibt sich ein größerer Druckstoß in der Druckmessvorrichtung 38 als in dem Fall eines geöffneten Belüftungsventils 40. Bei geöffnetem Belüftungsventil 40 kann die Luft aus den Messvolumina 34, 36 mit geringerem Druckverlust entweichen. Damit dennoch ein zuverlässiges Starten des Evakuierens des Folienkammervolumens 20 und der Überwachung der Messvolumina 34, 36 erfolgen kann, wird der Druckschwellenwert an die zu erwartenden Drücke beim Schließen der Folienkammer 10 angepasst. Das Evakuieren des Folienkammervolumens 20 und das Überwachen der Messvolumina 34, 36 wird automatisch von einer in den Figuren nicht dargestellten Steuervorrichtung gestartet, wenn sowohl die Positionsmessvorrichtung 61 die geschlossene Position angibt, als auch der durch das Schließen resultierende Druckstoß in den Messvolumina 34, 36 gemessen wird. Hierzu ist die Steuervorrichtung mit der Positionsmessvorrichtung 61 und der Druckmessvorrichtung 38 verbunden, um deren Messsignale zu erfassen und zu verarbeiten. Die Steuervorrichtung ist auch mit der Vakuumpumpe 56 verbunden, um die Vakuumpumpe 56 automatisch nach Schließen der Folienkammer 10 zum Evakuieren des Folienkammervolumens 20 zu starten.

## Patentansprüche

1. Verfahren zum Prüfen eines Prüflings auf das Vorhandensein eines Lecks unter Verwendung einer Folienkammer (10) zur Aufnahme des Prüflings (22), wobei die Folienkammer (10) ein Folienkammervolumen (20) umschließende Wände aufweist, die mindestens einen flexiblen Wandbereich aufweisen, mit den Schritten:
Einlegen des Prüflings (22) in die Folienkammer (10), und
Schließen der Folienkammer (10),
wobei das vollständige Schließen der Folienkammer anhand des Signals einer Positionsmessvorrichtung (61), die die Relativposition der Folienkammerwände zueinander erfasst, ermittelt wird,
**dadurch gekennzeichnet,**
**dass** an den flexiblen Wandbereichen ein Messvolumen (34, 36) angrenzt, das auf der dem Folienkammervolumen (20) gegenüber liegenden Seite des flexiblen Wandbereichs angeordnet und hermetisch von dem Folienkammervolumen (20) getrennt ausgebildet ist, wobei das Messvolumen (34, 36) überwacht wird um anhand des Ergebnisses der Überwachung eine Aussage über die Größe eines möglichen Lecks in dem Prüfling (22) zu treffen, und dass das vollständige Schließen der Folienkammer (10) ermittelt wird, indem der Druck in den Messvolumina (34, 36) gemessen wird und indem überwacht wird, ob der gemessene Druck einen vorgegebenen Schwellenwert übersteigt, wobei der geschlossene Zustand der Folienkammer erst detektiert wird wenn das Druckmesssignal den Schwellenwert übersteigt und das Positionsmesssignal der Positionsmessvorrichtung dem geschlossenen Zustand entspricht.

2. Verfahren nach Anspruch 1, **dadurch gekennzeichnet, dass** ein Evakuieren der Folienkammer (10) und/oder des Überwachens des Messvolumens (34, 36) zur Leckagedetektion automatisch gestartet werden, nachdem ermittelt wurde, dass die Folienkammer (10) geschlossen ist.

3. Verfahren nach einem der Ansprüche 1 - 2, **dadurch gekennzeichnet, dass** die Positionsmessvorrichtung (61) ein Kontaktschalter ist oder den Abstand zwischen den Wänden der Folienkammer (10) misst.

## Claims

1. A method for testing a test specimen for the presence of a leak using a film chamber (10) for accommodating the test specimen (22), wherein the film chamber (10) comprises walls enclosing a film chamber volume (20), which walls include at least one flexible wall area, the method comprising the steps of:
placing the test specimen (22) into the film chamber (10), and
closing the film chamber (10),
wherein complete closing of the film chamber is determined on the basis of the signal of a position measuring device (61) which detects the relative position of the film chamber walls with respect to each other,
**characterized in that**
a measuring volume (34, 36) is provided adjacent to the flexible wall areas, which measuring volume is configured to be arranged on the side of the flexible wall area opposite the film chamber volume (20) and hermetically sealed towards the film chamber volume (20), wherein the measuring volume (34, 36) is monitored in order to assess the size of a possible leak in the test specimen (22) on the basis of the monitoring result, and
complete closing of the film chamber (10) is detected by measuring the pressure in the measuring volumes (34, 36) and by monitoring whether the measured pressure exceeds a predefined threshold value, wherein the closed state of the film chamber is detected only when the pressure measuring signal exceeds the threshold value and the position measuring signal of the position measuring device corresponds to the closed state.

2. The method according to claim 1, **characterized in that** evacuating the film chamber (10) and/or monitoring the measuring volume (34, 36) are automatically started for leak detection after it has been determined that the film chamber (10) is closed.

3. The method according to any one of claims 1-2, **characterized in that** the position measuring device (61) is a contact switch or measures the distance between the walls of the film chamber (10).

## Revendications

1. Procédé de vérification de la présence d'une fuite dans un échantillon à l'aide d'une chambre à film (10) permettant d'accueillir l'échantillon (22), la chambre à film (10) présentant des parois qui entourent un volume de chambre à film (20) et présentent au moins une région de paroi flexible, comprenant les étapes consistant à :
insérer l'échantillon (22) dans la chambre à film (10), et
fermer la chambre à film (10),
la fermeture complète de la chambre à film étant déterminée en se basant sur le signal d'un dispositif de mesure de position (61) qui détecte la position relative des parois de chambre à film les unes par rapport aux autres,
**caractérisé**
**en ce qu'**un volume de mesure (34, 36) agencé sur le côté, faisant face au volume de chambre à film (20), de la région de paroi flexible et conçu pour être séparé hermétiquement du volume de chambre à film (20) jouxte les régions de paroi flexibles, le volume de mesure (34, 36) étant surveillé afin, en se basant sur le résultat de la surveillance, de caractériser l'ampleur d'une éventuelle fuite dans l'échantillon (22), et en ce que la fermeture complète de la chambre à film (10) est déterminée en mesurant la pression dans les volumes de mesure (34, 36) et en surveillant si la pression mesurée dépasse une valeur de seuil prédéfinie, l'état fermé de la chambre à film n'étant détecté que si le signal de mesure de pression dépasse la valeur de seuil et si le signal de mesure de position du dispositif de mesure de position correspond à l'état fermé.

2. Procédé selon la revendication 1, **caractérisé en ce que** la mise sous vide de la chambre à film (10) et/ou la surveillance du volume de mesure (34, 36) afin de détecter des fuites, est/sont déclenchée (s) de manière automatique après que la fermeture de la chambre à film (10) a été déterminée.

3. Procédé selon l'une quelconque des revendications 1 et 2, **caractérisé en ce que** le dispositif de mesure de position (61) est un commutateur à contact ou mesure la distance entre les parois de la chambre à film (10).
